# DEMANDE DE BREVET EUROPEEN

(11) **EP 0 783 118 A1**
(43) Date de publication de la demande: **09.07.1997**
(21) Numéro de dépôt: 96402815.3
(22) Date de dépôt: 19.12.1996
(51) Int. Cl.: G02B 6/293, G02B 6/124

(54) **Démultiplexeur en longueur d'onde**

(30) Priorité: 28.12.1995 FR 9515657
(71) Demandeur: ALCATEL ALSTHOM COMPAGNIE GENERALE D'ELECTRICITE, 75008 Paris (FR)
(72) Inventeur: Bissessur, Hans, 75014 Paris (FR); Mestric, Roland, 75014 Paris (FR); Duchet, Christian, 91460 Marcoussis (FR)
(74) Mandataire: Fournier, Michel

(57) **Abrégé**

Le démultiplexeur comporte un espace de diffraction (Ce) délimité par une surface de réception (Ze) couplée à un réseau (R).

Afin d'obtenir des ondes de sortie (Sk) à réponse spectrale aplatie, le guide d'entrée (Ge) et la surface de réception (Ze) sont dimensionnés pour que l'onde d'entrée (e) diffracte sur cette surface (Zc) en présentant plusieurs lobes secondaires.

Application notamment aux systèmes de communication optiques à multiplexage de longueurs d'onde.

## Description

L'invention se situe dans le domaine des composants photoniques et concerne plus particulièrement les démultiplexeurs de longueurs d'onde.

Ces dispositifs, généralement réalisés sous la forme de composants intégrés, trouvent de nombreuses applications dans les systèmes de communication optiques utilisant le multiplexage en longueurs d'onde (WDM).

Parmi les différents types de multiplexeurs ou démultiplexeurs passifs connus, nous considérons ceux qui utilisent un élément dispersif angulairement, constitué d'un réseau de diffraction gravé ou d'un réseau formé de guides de longueurs différentes.

Un exemple de démultiplexeur à réseau gravé est décrit dans l'article intitulé "Grating spectrograph in InGaAsP/InP for dense wavelength division multiplexing", par C. Cremer et al, Applied Physics Letters, 59(6), 5 août 1991, pages 627 et 628.

Un exemple de réalisation d'un démultiplexeur à réseau de guides est décrit dans le brevet US 5 212 758.

Pour l'application aux systèmes de communication optiques, ces deux types de dispositif présentent l'avantage d'être réalisables sous forme intégrée, ce qui permet de limiter les pertes de couplage. Un problème qui se pose cependant dans cette application est d'éviter que de légers décalages des longueurs d'onde portées par le multiplex d'entrée se traduisent par une perte de puissance des ondes fournies en sortie. Il convient donc que chaque onde de sortie du démultiplexeur présente une réponse en fonction de la longueur d'onde la plus constante possible au voisinage de la longueur d'onde attribuée à cette sortie. En d'autres termes, la courbe représentative de cette réponse devrait avoir une forme qui se rapproche au mieux de celle d'un rectangle.

Une première solution a été proposée dans l'article "Phased-array wavelength demultiplexer with flattened wavelength response", par M.R. Amersfoort et al, ELECTRONICS LETTERS, 17 Février 1994, Vol.30, No.4 pages 300 à 302. Cet article décrit un démultiplexeur intégré constitué de deux coupleurs en étoile reliés entre eux par un réseau de guides de longueurs différentes. Pour obtenir une réponse spectrale plate, il est proposé d'utiliser des guides de sortie multimodes qui permettent une recombinaison de plusieurs modes. Cette solution n'est cependant pas utilisable si l'on veut coupler les sorties à une fibre optique ou à un guide monomode et ne présente donc d'intérêt que pour un composant en fin de ligne suivi par un détecteur.

Une autre solution utilisant le même type de démultiplexeur est décrite dans l'article "Arrayed-waveguide grating multiplexer with flat spectral response", K. Okamoto et H. Yamada, OPTICS LETTERS, 1er Janvier 1995, Vol. 20, No.1, pages 43 à 45.

Selon cet article, les extrémités des guides du réseau ont des largeurs différentes de façon à recueillir une fraction plus ou moins importante de la lumière qu'ils reçoivent. En réalisant une répartition d'énergie selon un sinus cardinal, chaque onde en sortie du dispositif aura une réponse spectrale ayant sensiblement la forme d'un rectangle.

L'inconvénient principal de cette méthode est d'augmenter sensiblement les pertes du dispositif (2dB environ). De plus, du fait de la variation de la largeur des guides du réseau, le contrôle de la phase dans chacun de ces guides est très délicat.

L'invention a pour but de proposer une autre solution n'ayant pas les inconvénients des solutions connues mentionnées précédemment et pouvant s'appliquer aussi bien aux démultiplexeurs à réseaux gravés qu'à ceux à réseau de guides. Une analyse détaillée du fonctionnement de ces deux types de dispositifs montre que les ondes de sortie sont obtenues à partir de l'onde d'entrée par deux opérations successives. La première est une diffraction de l'onde d'entrée dans un coupleur. La deuxième opération est une dispersion angulaire due au réseau gravé ou au réseau de guides. Or mathématiquement et sous réserve d'un dimensionnement approprié, la première opération (diffraction) peut être assimilée en première approximation à une transformée de Fourier dans l'espace libre à une dimension. La seconde opération (dispersion) peut alors être considérée comme une transformée de Fourier inverse de l'onde diffractée à la fois dans l'espace et dans le domaine des longueurs d'ondes.

Ainsi, en respectant les conditions de dimensionnement qui seront exposées ultérieurement, la réponse spectrale de chaque onde de sortie sera représentée par une courbe sensiblement de même forme que celle qui représente la variation de l'amplitude de l'onde d'entrée en fonction de la position latérale dans le guide d'entrée.

Plus précisément l'invention a pour objet un démultiplexeur de longueurs d'onde comprenant un espace de diffraction, un réseau, et une surface de focalisation, ledit espace de diffraction comportant au moins une entrée couplée à un guide d'entrée et une surface de réception située à l'opposé de ladite entrée et couplée au réseau, ledit guide d'entrée servant à introduire une onde optique d'entrée dans l'espace de diffraction, ledit réseau étant conçu de façon à focaliser une onde de sortie sur la surface de focalisation à une position fonction de la longueur d'onde de l'onde d'entrée, caractérisé en ce que ledit guide d'entrée et ladite surface de réception sont dimensionnés de sorte qu'en réponse à une onde optique d'entrée se forme sur la surface de réception une onde diffractée dont l'amplitude en fonction de la position sur la surface de réception présente une partie au moins de plusieurs lobes secondaires.

L'existence de lobes secondaires peu espacés sur la surface de réception est conditionnée par un confinement latéral suffisant de l'onde d'entrée, l'importance du confinement étant habituellement mesurée par le "facteur de confinement" défini comme le rapport de la puissance optique de la partie de l'onde délimitée par le guide à la puissance optique totale contenue dans le guide et dans les régions qui l'entourent. De même, on définit le "facteur de confinement latéral" comme le rapport de la puissance optique contenue dans l'espace délimité par les bords latéraux du guide à la puissance optique totale.

Ainsi, selon un aspect de réalisation de l'invention, le guide d'entrée comporte une couche guidante délimitée latéralement par un milieu d'indice plus faible que celui de la couche guidante et les dimensions de la section transversale de la couche guidante et les valeurs desdits indices sont choisis de façon à ce que le guide d'entrée présente un facteur de confinement latéral au moins égal à 95 %.

Selon un autre aspect de réalisation, le guide d'entrée est formé à partir d'une couche guidante enterrée à laquelle on a fait subir une gravure latérale. Selon cette disposition, le milieu délimitant latéralement la couche guidante est l'air, ce qui assure un saut d'indice maximum. Il en résulte que le facteur de confinement latéral est maximum pour une géométrie et une composition données de la couche guidante.

D'autres aspects de réalisation et avantages de l'invention apparaîtront dans la suite de la description en référence aux figures.
- la figure 1 est une représentation schématique d'un démultiplexeur à réseau de guides mettant en oeuvre l'invention.
- les figures 2 à 5 sont des courbes permettant d'expliquer le fonctionnement du démultiplexeur selon l'invention.
- la figure 6 est une vue d'ensemble d'une réalisation particulière d'un démultiplexeur conforme à l'invention.
- les figures 7 et 8 sont des courbes de réponse spectrale obtenues respectivement avec un démultiplexeur à réseau classique et un démultiplexeur selon l'invention.
- la figure 9 montre une section transversale d'un guide d'entrée selon un mode de réalisation conforme à l'invention.
- la figure 10 représente schématiquement un démultiplexeur à réseau gravé auquel peut s'appliquer également l'invention.

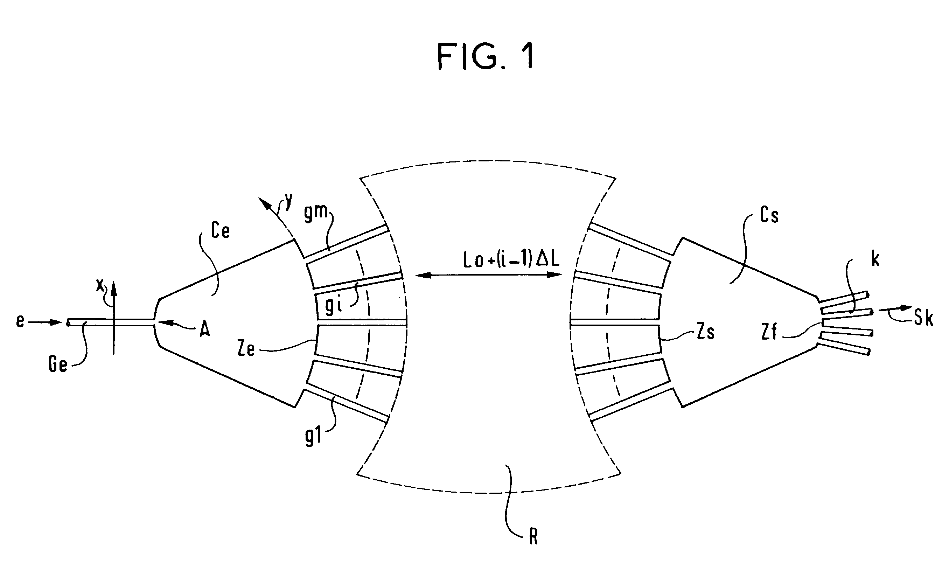

La figure 1 est une vue de dessus schématique d'un démultiplexeur à réseau de guides. Il est constitué d'un premier coupleur en étoile Ce dont l'entrée A est reliée à un guide d'entrée Ge. La face du coupleur Ce qui se trouve à l'opposé du guide d'entrée Ge constitue une surface de réception Ze de l'onde d'entrée e introduite par le guide Ge.

La surface Ze est reliée à l'entrée d'un réseau R constitué des guides g1,...,gi,...,g_{M}. L'autre extrémité du réseau R est reliée à une surface d'entrée Zs d'un second coupleur en étoile Cs. Sa face qui est à l'opposée de la surface d'entrée Zs constitue une surface de focalisation Zf qui est reliée à une pluralité de guides de sortie Gk. Chaque guide Gk est affecté à une longueur d'onde déterminée.

Dans une réalisation intégrée, les coupleurs et les guides sont constitués de couches guidantes de faible épaisseur.

D'un point de vue géométrique, les deux faces opposées de chaque coupleur qui sont reliées à des guides sont cylindriques et de même rayon. Généralement, les deux coupleurs ont des faces de même rayon.

Pour obtenir la fonction de démultiplexage, les guides du réseau sont tous de longueurs optiques différentes de façon à ce que les déphasages relatifs créés par les guides vérifient une fonction linéaire de la position y de l'entrée des guides sur la surface de réception Ze. Pour des raisons de compacité et de simplicité, les entrées des guides gi sont régulièrement espacées le long de la surface de réception Ze. Leurs sorties sont également régulièrement espacées le long de la surface d'entrée Zs du second coupleur Cs. La longueur du guide gᵢ de rang i est alors égale à Lo + (i-1)ΔL, où Lo est la longueur du guide le plus court g1 et ΔL est le pas du réseau.

Si λo est la valeur dans le vide de la longueur d'onde que l'on veut focaliser au centre de la surface de focalisation Zf du second coupleur, on choisira ΔL= mλo/n, m étant l'ordre du réseau et n l'indice effectif des couches guidantes du réseau.

En fonctionnement, l'onde à démultiplexer e, supposée monomode, est introduite dans le premier coupleur Ce par l'intermédiaire du guide d'entrée Ge. Les ondes de différentes longueurs d'onde constituant le multiplex focalisent alors sur la surface Zf à des positions séparées et les ondes de sorties correspondantes Sk sont reçues par les guides de sortie Gk.

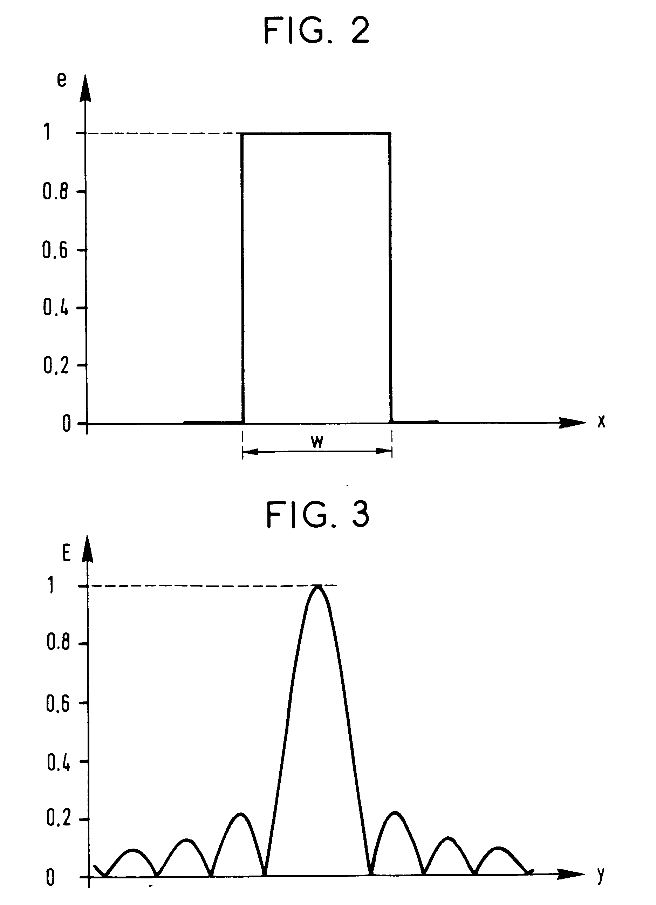

En assimilant chaque coupleur à un espace libre à deux dimensions, on obtiendrait une réponse spectrale rectangulaire pour chaque onde de sortie si l'amplitude de l'onde d'entrée e en fonction de la position transversale x du guide d'entrée Ge pouvait être représentée par un rectangle conformément à la figure 2, où e est l'amplitude en valeurs relatives et w est la largeur du guide. L'amplitude de l'onde diffractée E apparaissant sur la surface de réception Ze vérifierait alors en fonction de la position y sur cette surface une loi en sinus cardinal, conformément à la figure 3, où E est l'amplitude en valeurs relatives. Si les dimensions des surfaces Ze et Zs étaient suffisantes pour recevoir tous les lobes secondaires d'amplitude significative de l'onde diffractée E, on obtiendrait en sortie une réponse spectrale ayant la forme d'un rectangle.

Ce cas idéal n'est toutefois pas réalisable en pratique car le profil rectangulaire de la figure 2 est physiquement impossible. Par ailleurs, les dimensions des surfaces Ze et Zs étant nécessairement limitées, le nombre de lobes secondaires qu'elles pourront recevoir sera lui-même limité.

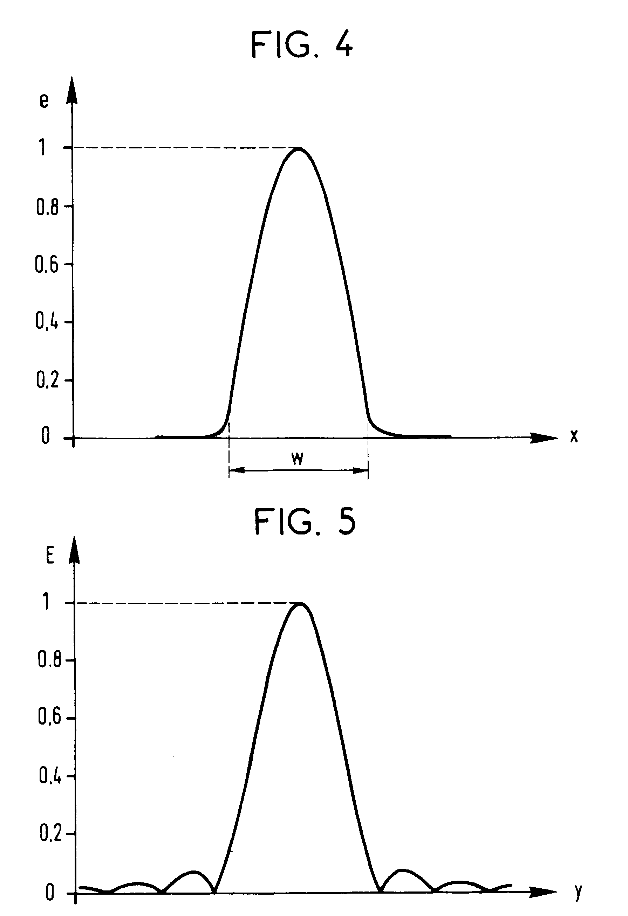

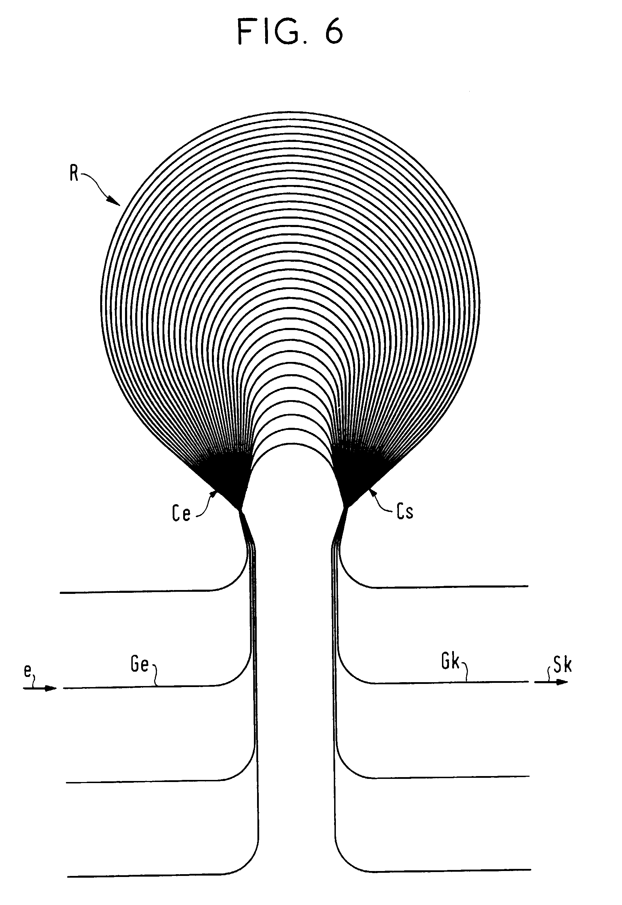

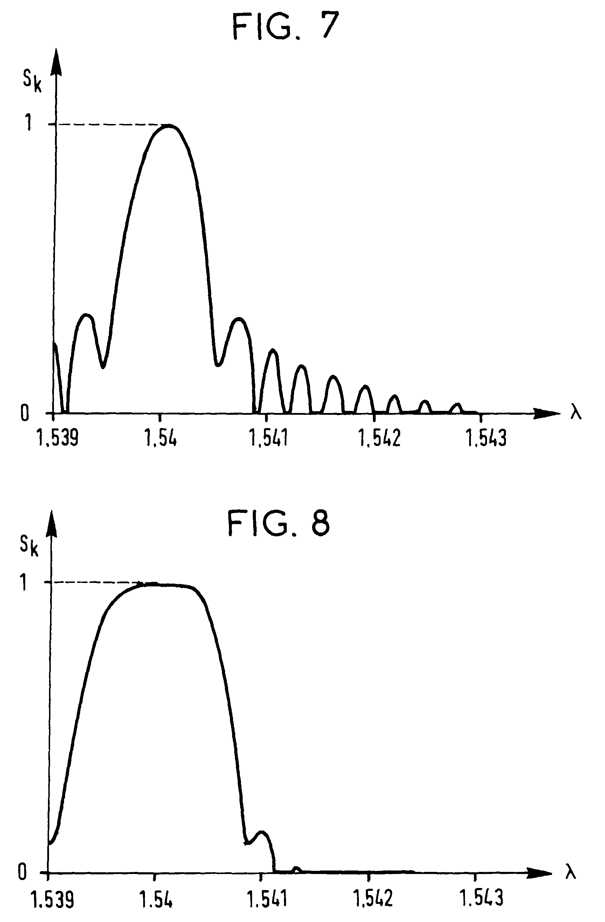

La figure 4 montre une forme d'onde d'entrée réalisable en pratique grâce à un très fort confinement de l'onde dans le guide d'entrée. L'onde diffractée E qui en résulte est représentée à la figure 5. On peut remarquer que le lobe principal est plus large que dans le cas de la figure 3. Toutefois, les simulations et l'expérience montrent que si le réseau R comporte au moins deux guides placés pour recevoir une partie des deux lobes secondaires situés de part et d'autre du lobe principal, une amélioration sensible de la réponse spectrale peut déjà être obtenue. Ainsi, avec une réalisation particulière utilisant la structure représentée à la figure 6 où le réseau comporte 36 guides, la réponse spectrale d'une des ondes de sortie Sk a l'allure représentée à la figure 8. Si par contre on avait utilisé un dispositif classique avec un guide d'entrée ayant un confinement habituel, c'est-à-dire inférieur à 95 %, la réponse spectrale aurait l'allure représentée à la figure 7.

Nous allons maintenant donner les caractéristiques de réalisation détaillées du multiplexeur représenté à la figure 6 :
- substrat d'InP,
- composition des couches guidantes : InGaAsP
- indice effectif n=3,22
- nombre de guides du réseau = 36
- rayon des surfaces Ze et Zs = 85 µm
- largeur des guides d'entrée w = 2 µm
- écartement des axes des guides au niveau des coupleurs = 2,7 µm
- λo = 1,54 µm
- ordre du réseau m = 146

Avec cette réalisation, les guides du réseau prennent en compte le lobe principal et pratiquement les deux lobes secondaires voisins. Le secteur centré à l'entrée A du coupleur Ce et qui couvre Ze aura alors un angle supérieur à 65°. Le coupleur Cs est identique au coupleur Ce.

D'une façon générale, pour recouvrir deux lobes secondaires, on peut donner une estimation de la valeur minimale αm de l'angle du secteur défini ci-dessus par αₘ = 4λo/(n.w), où λo est la longueur d'onde moyenne dans le vide du multiplex à traiter, n est l'indice effectif de la couche guidante et w est la largeur du guide.

On peut noter enfin que le démultiplexeur est symétrique et comporte autant de guides d'entrée que de guides de sortie. Ainsi, on peut permuter les entrées et les sorties. De plus, on réalise ainsi une redondance pouvant être utile en cas de défaillance d'un ou de plusieurs guides d'entrée.

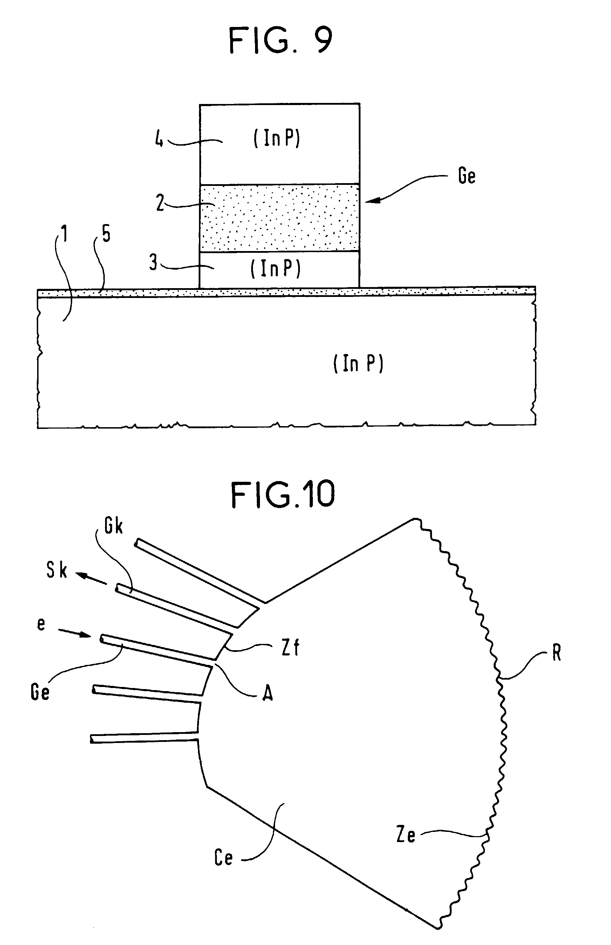

La figure 9 représente un mode de réalisation du guide d'entrée Ge permettant d'obtenir un facteur de confinement très élevé, par exemple supérieur à 99 % pour tout type de matériau utilisable en pratique. Selon cet exemple, on a formé une couche guidante 2 constituée d'un alliage quaternaire InGaAsP et enterrée dans un substrat de phosphure d'indium. Pour former le guide, on a ensuite effectué des gravures latérales jusqu'à une couche d'arrêt de gravure 5 située en dessous de la couche guidante 2. Ainsi, la couche 2 est environnée latéralement par l'air et délimitée par des couches de confinement inférieure 3 et supérieure 4 en phosphure d'indium.

Du point de vue dimensionnement on aura par exemple :
- épaisseur de la couche guidante 2=0,8 µm
- largeur de la couche guidante 2 = 2 µm
- épaisseur de la couche inférieure 3 = 0,4 µm
- épaisseur de la couche supérieure 4 = 0,9 µm.

Bien entendu, l'invention pourra être intégrée dans d'autres matériaux possédant des propriétés optiques appropriées. On peut citer par exemple l'arséniure de gallium, le silicium ou la silice, l'alumine, le niobate de lithium, ainsi que certains polymères.

En variante, on peut aussi utiliser le réseau de guides en réflexion. Dans ce cas, on utilise uniquement le premier coupleur Ce que l'on relie en sortie à un réseau de guides ayant des longueurs différentes et se terminant par des faces réfléchissantes. Comme dans la réalisation précédente, le réseau comporte des guides placés pour recevoir une partie au moins des lobes secondaires qui se forment sur la surface de réception Ze.

Selon une autre variante de réalisation de l'invention, on peut utiliser un démultiplexeur à réseau gravé représenté schématiquement à la figure 10. Le réseau gravé réfléchissant R est fonctionnellement équivalent au réseau de guide de la variante précédente.

Contrairement à la première réalisation, les réseaux fonctionnant en réflexion interdisent d'utiliser dans le multiplex d'entrée la longueur d'onde qui focaliserait au point d'entrée A du coupleur.

## Revendications

1. Démultiplexeur de longueurs d'onde comprenant un espace de diffraction (Ce), un réseau (R), et une surface de focalisation (Zf), ledit espace de diffraction (Ce) comportant au moins une entrée (A) couplée à un guide d'entrée (Ge) et une surface de réception (Ze) située à l'opposé de ladite entrée (A) et couplée au réseau (R), ledit guide d'entrée (Ge) servant à introduire une onde optique d'entrée (e) dans l'espace de diffraction (Ce), ledit réseau (R) étant conçu de façon à focaliser une onde de sortie (Sk) sur la surface de focalisation (Zf) à une position fonction de la longueur d'onde de l'onde d'entrée (e), caractérisé en ce que ledit guide d'entrée (Ge) et ladite surface de réception (Ze) sont dimensionnés de sorte qu'en réponse à une onde optique d'entrée (e) se forme sur la surface de réception (Ze) une onde diffractée (E) dont l'amplitude en fonction de la position sur la surface de réception (Ze) présente une partie au moins de plusieurs lobes secondaires.

2. Démultiplexeur selon la revendication 1, caractérisé en ce que le guide d'entrée (Ge) comporte une couche guidante (2) délimitée latéralement par un milieu d'indice plus faible que celui de la couche guidante et en ce que les dimensions de la section transversale de la couche guidante et les valeurs desdits indices sont choisis de façon à ce que le guide d'entrée (Ge) présente un facteur de confinement latéral au moins égal à 95 %.

3. Démultiplexeur selon l'une des revendications 1 ou 2, caractérisé en ce que le guide d'entrée (Ge) est formé à partir d'une couche guidante enterrée à laquelle on a fait subir une gravure latérale.

4. Démultiplexeur selon l'une des revendications 1 à 3, caractérisé en ce que ledit espace de diffraction est un premier coupleur en étoile (Ce) relié en sortie à un second coupleur en étoile (Cs) par l'intermédiaire d'un réseau (R) de guides (gi) ayant des longueurs différentes, ladite surface de focalisation (Zf) étant constituée par une face délimitant le second coupleur (Cs) et située à l'opposé du réseau (R) et en ce que ledit réseau comporte des guides placés pour recevoir une partie au moins desdits lobes secondaires.

5. Démultiplexeur selon l'une des revendications 1 à 3, caractérisé en ce que ledit espace de diffraction est un coupleur en étoile (Ce) relié en sortie à un réseau (R) de guides (gi) ayant des longueurs différentes et se terminant par des faces réfléchissantes et en ce que ledit réseau comporte des guides placés pour recevoir une partie au moins desdits lobes secondaires.

6. Démultiplexeur selon l'une des revendications 1 à 3, caractérisé en ce que ledit espace de diffraction est un coupleur (Ce) dont la face opposée à ladite entrée (E) est un réseau gravé réfléchissant constituant à la fois ladite surface de réception (Ze) et ledit réseau (R).

7. Démultiplexeur selon l'une des revendications 1 à 6, caractérisé en ce qu'il est intégré dans un matériau semi-conducteur.

8. Démultiplexeur selon la revendication 7, caractérisé en ce que ledit matériau semi-conducteur est du phosphure d'indium.

9. Démultiplexeur selon l'une des revendications 1 à 6, caractérisé en ce qu'il est intégré dans du silicium.
